# EUROPÄISCHE PATENTANMELDUNG

(11) **EP 1 637 477 A2**
(43) Veröffentlichungstag der Anmeldung: **22.03.2006**
(21) Anmeldenummer: 05107813.7
(22) Anmeldetag: 25.08.2005
(51) Int. Cl.: B65G 1/04, B65G 23/00

(54) **System mit stationären und mobilen Funktionseinrichtungen**

(30) Priorität: 20.09.2004 DE 102004045517
(71) Anmelder: SIEMENS AKTIENGESELLSCHAFT, 80333 München (DE)
(72) Erfinder: Springmann, Gerhard, 63801 Kleinostheim (DE)

(57) **Zusammenfassung**

Pufferlager zur Zwischenspeicherung von Ladungsträgern (P) mit einer Mehrzahl von Abstellplätzen für diese Ladungsträger (P). Die Abstellplätze sind beispielsweise als Kettenförderer (F) ausgebildet und in einer oder mehreren Reihen nebeneinander angeordnet. Über einen Verteilerwagen (V), der entlang einer Reihe von Förderern (F) verfahrbar ist, sind die Abstellplätze bedienbar. Der Verteilerwagen weist eine Übergabevorrichtung auf, mittels derer ein Ladungsträger (P) wahlweise an einen Abstellplatz übergeben oder von diesem übernommen werden kann. Die stationären Förderer (F) weisen jeweils einen eigenen elektrischen Antrieb auf, wobei die elektrische Energie zum Antrieb eines Förderers (F) jeweils von dem Verteilerwagen (V) individuell gesteuert einspeisbar ist, wenn dieser eine Übergabeposition zum jeweiligen stationären Förderer (F) erreicht hat.

## Beschreibung

Die Erfindung betrifft ein System mit stationären und mobilen Funktionseinrichtungen gemäß dem Gattungsbegriff des Patentanspruchs 1.

Pufferlager zur Zwischenspeicherung von Ladungsträgern wie etwa Paletten, auf denen Waren transportiert und gelagert werden können, werden vielfach benötigt, um bestimmte Arbeitsabläufe optimal gestalten zu können. Sie werden beispielsweise häufig eingesetzt im Kommissionierbereich von Hochregallagern und dienen dann dazu, die Reihenfolge der Entnahme einzelner Ladungsträger aus dem Hochregallagerbereich unabhängig von den Bedürfnissen der Reihenfolgegestaltung im Kommissionierbereich vornehmen zu können, wo aus den einzelnen Ladungsträgern Waren zur Zusammenstellung individueller Aufträge entnommen werden müssen. Die Entnahmereihenfolge für einzelne Ladungsträger durch das jeweilige Regalbediengerät aus dem Hochregallager kann somit ohne Rücksicht auf die genaue Reihenfolge bei der Warenentnahme im Kommissionierbereich optimiert werden, um für das gesamte Lagersystem einschließlich Kommissionierbereich einen maximalen Durchsatz zu gewährleisten.

Als Pufferlager zur Zwischenspeicherung von Ladungsträgern werden vielfach einfache Gestelle verwendet, auf denen die einzelnen Ladungsträgern jeweils nach der Entnahme aus dem Hochregallager vorübergehend abgestellt werden können, bis sie im Rahmen der Kommissionierung tatsächlich benötigt werden. Die Abstellplätze für die Ladungsträger in einem solchen Pufferlager können beispielsweise mittels eines Verteilerwagens mit den Ladungsträgern, die beispielsweise Paletten beliebiger Art, insbesondere Normpaletten, oder Gitterboxen oder auch Tablare sein können, be- und entladen werden. Ein solcher Verteilerwagen, der eine verfahrbare Funktions- oder Transporteinrichtung bildet, ist zweckmäßigerweise zur Handhabung der Ladungsträger mit einer Teleskopgabel ausgerüstet. Ein derartiges einfaches Pufferlager erfordert zwar nur einen geringen Bauaufwand, ermöglicht aber auf der anderen Seite nur eine relativ geringe Umschlaggeschwindigkeit und somit eine niedrige Durchsatzleistung.

Zur Erhöhung der Umschlaggeschwindigkeit und somit auch der Durchsatzleistung ist es bekannt, anstelle von starren Abstellplätzen, auf denen die Ladungsträger vorübergehend gelagert werden können, eine Vielzahl von relativ kurzen Förderern in Reihe nebeneinander anzuordnen, auf denen jeweils die Ladungsträger abgestellt werden können. Üblicherweise sind diese kurzen Fördererstrecken, die beispielsweise als Kettenförderer ausgebildet sind und somit jeweils eine stationäre Funktions- oder Transporteinrichtung bilden, so bemessen, dass lediglich ein einzelner Ladungsträger darauf Platz findet. Grundsätzlich möglich ist es jedoch, auch etwas längere Förderstreckenstücke zu verwenden, auf denen jeweils mehrere Ladungsträger Platz finden können. Die Bedienung der einzelnen Abstellplätze erfolgt hierbei wiederum durch einen oder gegebenenfalls auch mehrere Verteilerwagen, die sich üblicherweise in einer Gasse zwischen im parallelen Abstand sich gegenüberliegenden Reihen von nebeneinander angeordneten Förderstreckenabschnitten an diesen Förderstreckenabschnitten vorbeibewegbar sind. Ein solcher Verteilerwagen ist ebenfalls mit einem kurzen Förderstreckenabschnitt ausgerüstet, der die Übergabevorrichtung zur Übergabe oder Übernahme eines Ladungsträgers an bzw. von einem Abstellplatz bildet. In manchen Fällen ist der Verteilerwagen mit zwei nebeneinander angeordneten Förderstreckenabschnitten versehen, um in einem einzigen Zyklus gleichzeitig zwei Ladungsträger übernehmen oder abgeben zu können oder gleichzeitig einen Ladungsträger abgeben und einen anderen übernehmen zu können. Ein Förderer auf dem Verteilerwagen stellt somit einen mobilen Förderer dar, während die Förderer der Abstellplätze stationär ausgebildet sind und im Unterschied zum mobilen Förderer üblicherweise nicht über einen eigenen Motorantrieb (z.B. Drehstrommotor mit Frequenzumrichter) verfügen. Um die Förderer der Abstellplätze bei der Übergabe oder Übernahme von Ladungsträgern dennoch bewegen zu können, ist es bekannt, den Verteilerwagen mit einem so genannten Reibrad auszurüsten, das in der jeweiligen Übergabeposition, in der der Förderer des Abstellplatzes und der mobile Förderer sich miteinander fluchtend und in geringem Abstand einander gegenüberstehen, in Richtung des stationären Förderers ausgeschwenkt werden kann und in mechanische Antriebsverbindung mit einem entsprechenden Reibrad des stationären Förderers bringbar ist. Für das Ein- und Ausschwenken beim An- und Abdocken des Reibrades werden jeweils einige Sekunden benötigt, die die Zykluszeit für einen Ein- oder Auslagervorgang des Pufferlagers signifikant erhöhen. Diese Lösung ist daher nur für mittelhohe Leistungen geeignet.

Zur Erlangung höchster Leistungsfähigkeit und somit kürzester Zykluszeiten in einem Pufferlager zur Zwischenspeicherung von Ladungsträgern ist es notwendig, die die Abstellplätze bildenden stationären Förderer mit jeweils eigenen Antrieben zu versehen. Damit ist aber bisher ein erheblicher Zusatzaufwand verbunden, der sich insbesondere auf die Anlagenteile zur Versorgung der Antriebsmotoren mit Antriebsenergie und die Steuerung der Antriebsmotoren bezieht. Besonders die Verkabelung für Strom- und Steuerleitungen und die erforderlichen Schaltschränke erfordern erheblichen bautechnischen Aufwand und Platzbedarf.

In einem System mit stationären und verfahrbaren Funktionseinrichtungen, die mit elektrischen Verbrauchern versehen sind, wird die Versorgung der elektrischen Verbraucher an den stationären Funktionseinrichtungen im Regelfall über eine stationäre Stromeinspeisung vorgenommen, zumal auch die Erzeugung elektrischer Energie weitestgehend stationär in Kraftwerken und die Energieverteilung über stationäre Netze erfolgt. Mobile Funktionseinrichtungen wie beispielsweise ein Wohnmobil auf einem Campingplatz werden während eines großen Teils ihrer Nutzung ebenfalls unter Stromeinspeisung aus einem stationären Netz betrieben.

Aufgabe der Erfindung ist es, bei einem gattungsgemäßen System den erforderlichen Aufwand für die Stromversorgung und die Ansteuerung von Antrieben zu vermindern.

Gelöst wird diese Aufgabe erfindungsgemäß durch die im kennzeichnenden Teil des Patentanspruchs 1 angegebenen Merkmale. In den Unteransprüchen sind vorteilhafte Ausgestaltungen der Erfindung angegeben.

Der Kern der vorliegenden Erfindung ist darin zu sehen, dass die Stromversorgung zumindest bei einem Teil der stationären Funktionseinrichtungen nicht stationär sondern über mindestens eine verfahrbare Funktionseinrichtung erfolgt. Dadurch wird der Verkabelungs- und steuerungstechnische Aufwand drastisch reduzierbar. Hierbei wird der Umstand genutzt, dass die jeweilige stationäre Funktionseinrichtung nur dann elektrisch betreibbar sein muss, wenn die verfahrbare Funktionseinrichtung arbeitstechnisch mit ihr korrespondiert.

Mit besonderem Vorteil wird die vorliegende Erfindung, die in unterschiedlichsten Systemen verwendbar ist, in einem Pufferlager zur Zwischenspeicherung von Ladungsträgern eingesetzt, das eine Vielzahl von Abstellplätzen für jeweils zumindest einen Ladungsträger aufweist, wobei zumindest ein Teil der Abstellplätze als stationäre Förderer ausgebildet sind. In diesem Pufferlager sind die Ladungsträger durch mindestens einen entlang der in mindestens einer Reihe nebeneinander angeordneten Abstellplätze verfahrbaren Verteilerwagen wahlweise an den jeweiligen stationären Förderer übergebbar und von diesem übernehmbar. Die elektrische Antriebsenergie für die stationären Förderer, die über einen eigenen elektrischen Motor zum Antrieb verfügen, wird nicht in üblicher Weise von außen durch stationär verlegte Zuleitungen vorgenommen, sondern wird durch den oder die Verteilerwagen individuell gesteuert eingespeist, wenn der jeweilige Verteilerwagen seine Übergabe- oder Übernahmeposition zum jeweiligen stationären Förderer des Abstellplatzes erreicht hat. Die Stromeinspeisung wird also vom Verteilerwagen selbst vorgenommen, der zu diesem Zweck beispielsweise mit entsprechenden Einspeiskontakten versehen ist, während die stationären Förderer mit entsprechenden Stromschienen zur Herstellung einer vorübergehenden elektrischen Verbindung ausgestattet sind. In gleicher Weise wie die Energieübertragung kann auch im Bedarfsfall eine Signalübertragung vorgenommen werden, um die Motorantriebe zu steuern. Selbstverständlich ist es im Rahmen der Erfindung auch möglich, anstelle konventioneller Kontakte über Stromschienen und Einspeiskontakte eine berührungslose Übertragung von Antriebsenergie und gegebenenfalls auch Steuersignalen vorzusehen. Insbesondere kann es sich hierbei um eine induktive Energie- und Signalübertragung handeln.

Nachfolgend wird die Erfindung anhand des in den Figuren dargestellten Ausführungsbeispiels eines Pufferlagers näher erläutert und in weiteren vorteilhaften Ausprägungen beschrieben.

Es zeigen:
- Figur 1: eine schematische perspektivische Ansicht eines erfindungsgemäß ausgebildeten Pufferlagers und
- Figur 2: eine Stirnansicht dieses Pufferlagers.

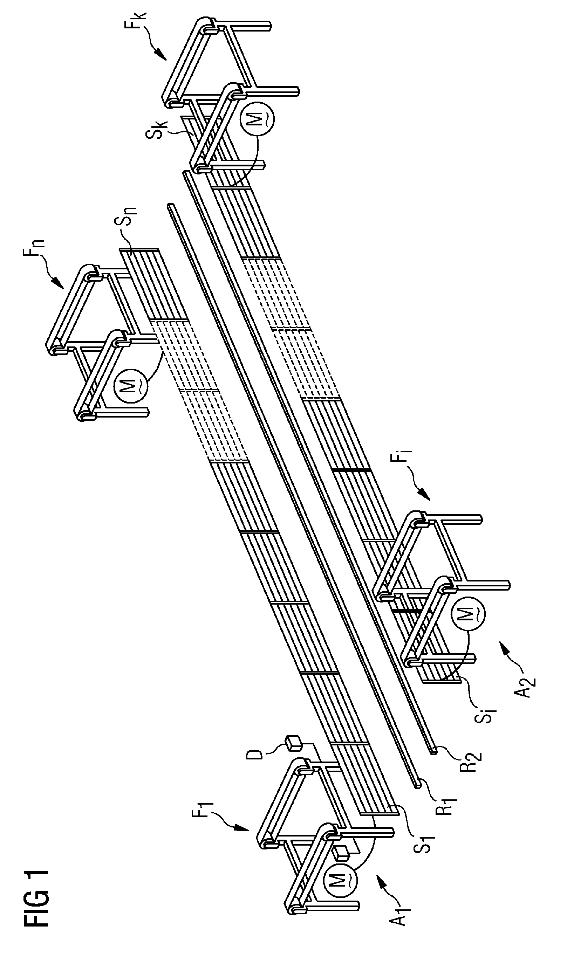

Das in Figur 1 schematisiert dargestellte Pufferlager weist eine Vielzahl von Abstellplätzen auf, die jeweils als stationäre Förderer ausgebildet und auf Gestellen montiert sind. Bei den stationären Förderern, die mit F₁, Fₙ, Fᵢ, Fₖ bezeichnet, sind handelt es sich in bevorzugter Weiterbildung der Erfindung um Ketten- oder Gurtförderer. Grundsätzlich könnten auch andere Förderer wie etwa Rollenförderer eingesetzt werden. Die Förderer sind im vorliegenden Fall in zwei sich gegenüberliegenden Reihen A₁ und A₂ jeweils nebeneinander stehend angeordnet. Zur Vereinfachung der Zeichnung sind in jeder Reihe A₁, A₂ jeweils nur der erste Förderer F₁, Fi, und der letzte Förderer Fn, Fk, dargestellt. Es versteht sich aber, dass jede Reihe A₁, A₂ weitere Förderer F aufweist, die jeweils relativ dicht nebeneinander angeordnet sind. Jeder Förderer F verfügt dabei über einen Antriebsmotor M, der vorzugsweise als Drehstrommotor ausgebildet ist und daher seine Drehrichtung je nach Ansteuerung ändern kann. Zweckmäßigerweise werden jeweils beide Spuren der Förderer F angetrieben. Hierzu kann beispielsweise eine gemeinsame Antriebswelle vorgesehen sein. Selbstverständlich wäre es auch möglich, jede Spur mit einem eigenen Motorantrieb zu versehen. Vor den beiden Reihen A₁, A₂ der Förderer F sind jeweils Stromschienen S angeordnet, die in einzelne Abschnitte zerteilt sind, die den Förderern F₁, Fₙ, Fᵢ, Fₖ zugeordnet und daher entsprechend mit S₁, Sₙ, Sᵢ, Sₖ bezeichnet sind. Die einzelnen Stromschienenabschnitte S₁ - Sₖ sind dabei jeweils elektrisch gegeneinander isoliert, und es besteht über eine stationär verlegte kurze Verkabelung eine Leitungsverbindung von dem jeweiligen Stromschienenabschnitt S₁, - Sₖ zu dem jeweiligen Antriebsmotor M des diesem Abschnitt zugeordneten stationären Förderers F₁, - Fₖ. In der Gasse, die zwischen den Förderern F₁, - Fₙ der Reihe A₁ und den Förderern F_{i,} - Fₖ der Reihe A₂ gebildet ist, sind Schienen R₁, R₂ verlegt, die den Verfahrweg eines in Figur 1 nicht dargestellten Verfahrwagens bilden. Durch die teilweise gestrichelte Darstellung der Schienen R₁, R₂ und der Stromschienen S soll die unbestimmte Länge des Pufferlagers bzw. die unbestimmte Anzahl von stationären Förderern F angedeutet werden.

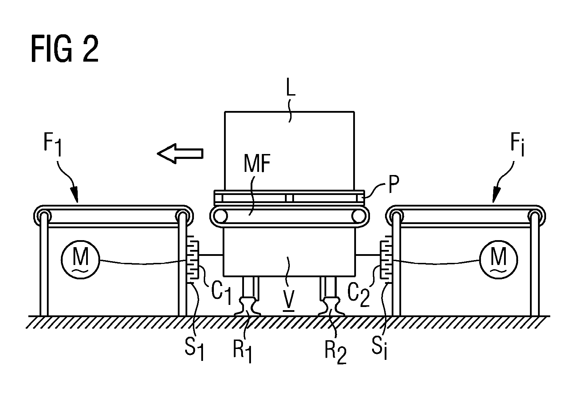

Aus der stirnseitigen Ansicht des Pufferlagers gemäß Figur 2 geht hervor, dass der Verteilerwagen V auf den beiden Schienen R₁, R₂ entlang der beiden Reihen A₁, A₂ der stationären Förderer F₁, - Fₖ verfahrbar ist. Der Verteilerwagen V ist mit einem den stationären Förderern F₁, - Fₖ entsprechenden mobilen Förderer MF ausgestattet, der als Übergabevorrichtung für den Austausch von Ladungsträgern P zwischen den stationären Förderern F₁ - Fₖ und dem Verteilerwagen V dient. Die Förderrichtung der Förderer F₁, - Fₖ und des mobilen Förderers MF sind jeweils parallel zueinander. Selbstverständlich wäre es auch möglich, die Abstellplätze nicht in geraden Linien A₁, A₂, sondern in einem Kurvenverlauf nebeneinander anzuordnen. Wesentlich für die Funktion ist lediglich, dass der Verteilerwagen V auf seinem Verfahrweg so geführt wird, dass sein mobiler Förderer MF beim Passieren eines stationären Förderers jeweils eine Stellung erreichen kann, in der eine Übergabe eines Ladungsträgers problemlos möglich ist, d.h. in der die Spuren der Förderer F₁, - Fₖ und MF jeweils miteinander fluchten. In Figur 2 ist auf dem mobilen Förderer MF ein als Normpalette ausgebildeter Ladungsträger P dargestellt, der eine Ladung L trägt, die beispielsweise aus einem Karton mit einer Vielzahl von gleichartigen (nicht dargestellten) Werkstücken besteht. Durch einen Pfeil ist angedeutet, dass dieser Ladungsträger P von dem mobilen Förderer MF auf den mit dem stationären Förderer F₁ ausgestatteten Abstellplatz zwischengelagert werden soll. Der Verteilerwagen V verfügt über eine eigene nicht dargestellte Stromversorgung (z.B. über Schleppkabel, Schleifkontakte oder induktiv) für seinen Fahrantrieb und für den Antrieb seines mobilen Förderers MF. Zweckmäßigerweise ist der Verteilerwagen V auch mit einer hier ebenfalls nicht dargestellten elektronischen Steuerung versehen, die nicht nur das Anfahren einer geeigneten Übergabeposition zum jeweiligen Abstellplatz, sondern auch die Bewegung des mobilen Förderers MF steuert; diese Steuerung kann mobil sein, ist aber zweckmäßig stationär angeordnet und kann auch zur Steuerung anderer Anlagenteile eingesetzt sein.

Aus der Ansicht der Figur 2 gehen nicht nur die den beiden stationären Förderern F₁ und Fᵢ zugeordneten Abschnitte der Stromschienen S₁ bzw. Sᵢ hervor, sondern auch die mit diesen Stromschienen S₁, Sᵢ korrespondierenden Einspeiskontakte C₁, C₂, mit denen vom Verteilerwagen V unter der Regie seiner elektronischen Steuerung elektrischer Strom selektiv in den jeweils gewünschten Stromschienenabschnitt S₁, eingespeist werden kann, so dass der Motor M in der gewünschten Antriebsrichtung den zugeordneten Förderer F₁ antreibt. Um für eine Entladung eines Ladungsträgers P von einem Abstellplatz eine Drehrichtungsumkehr des Motorantriebs zu bewirken, kann die Steuerung in bekannter Weise eine Phasenvertauschung bei der Stromversorgung vornehmen. Die Dauer des jeweiligen Motorantriebs und damit die Länge des bewirkten Verfahrwegs für den Ladungsträger P wird zweckmäßig ebenfalls über die elektronische Steuerung des Verteilerwagens V beeinflusst. Hierzu kann in vorteilhafter Weiterbildung der Erfindung beispielsweise an jedem Förderer F₁ - Fₙ eine vorzugsweise als Lichtschranke ausgebildete Detektoreinrichtung D vorgesehen werden, die den Spalt zwischen dem jeweiligen stationären Förderer F₁ und dem mobilen Förderer MF überwacht, also detektiert, ob ein Ladungsträger P diesen Spalt passiert hat oder nicht. Die Signale der Detektoreinrichtung D können jeweils über separate Stromschienen S für die Signalübertragung und entsprechende Schleifkontakte am Verteilerwagen an dessen elektronische Steuerung übertragen werden. Die Signalübertragung kann aber auch unmittelbar über die Energieübertragungsleitungen erfolgen. Selbstverständlich ist es auch möglich, anstelle von Stromschienen und Einspeiskontakten eine Übertragung der elektrischen Antriebsenergie und gegebenenfalls von Signalen auf berührungslosem Wege zwischen einem Förderer F₁, - Fₖ und dem Verteilerwagen V vorzunehmen, beispielsweise durch induktive Kopplung. Es ist keineswegs notwendig, jeden Abstellplatz mit einer Detektoreinrichtung D zu versehen. Der Spalt zwischen Verteilerwagen V und einer gesamten Reihe A₁ oder A₂ von stationären Förderern F₁ - Fₙ bzw. F₁ - Fₖ könnte aber auch beispielsweise jeweils mit einer einzigen Lichtschranke, die sich über die gesamte Reihe A₁, A₂ erstreckt, überwacht werden. Hinsichtlich einer Minimierung des Bauaufwandes hat es sich andererseits als zweckmäßig und ausreichend erwiesen, lediglich auf dem Verteilerwagen V eine Detektoreinrichtung vorzusehen, die vorteilhaft als Lichtschrankeneinrichtung ausgebildet ist und das Vorhandensein eines Ladungsträgers auf dem Verteilerwagen V ermitteln und der Steuerung anzeigen kann. Die Steuerung kann in einem solchen Fall mit einer so genannten Nachlaufsteuerung versehen werden, die in der Lage ist, den Motorantrieb eines stationären Förderers F noch ausreichend lang zu betreiben, wenn die Detektoreinrichtung des Verteilerwagens im Falle der Beladung eines Abstellplatzes feststellt, dass der jeweilige Ladungsträger P den Verteilerwagen V verlassen hat, bzw. wenn im Falle der Entladung eines Abstellplatzes der Ladungsträger F den Spalt zwischen dem stationären Förderer F und dem mobilen Förderer MF passiert bzw. in den Bereich des Verteilerwagens V eintritt. Die Nachlaufsteuerung betätigt hierzu den Motorantrieb so lange, bis der jeweilige Ladungsträger P seine Sollposition auf dem Abstellplatz bzw. auf dem Verteilerwagen erreicht hat. Dabei ist es nicht notwendig, das tatsächliche Erreichen dieser Sollposition jeweils durch einen gesonderten Sensor überwachen zu lassen, da es sich um jeweils relativ kurze Transportvorgänge handelt, die durch eine einfache Steuerung mit ausreichender Sicherheit ausgeführt werden können.

Um eine ruckartige Bewegung der stationären Förderer F und des mobilen Förderers MF zu vermeiden, empfiehlt sich die Verwendung von Frequenzumrichtern zur Ermöglichung eines relativ sanften Anfahrens der Motoren. Da die Motoren der stationären Förderer F jeweils immer nur einzeln angesprochen werden, kann dennoch zur Gewährleistung eines sanften Anfahrens ohne weiteres auf konventionelle Drehstrommotoren für deren Antrieb zurückgegriffen werden; es reicht aus, wenn lediglich ein solcher Frequenzumrichter auf dem Verteilerwagen vorgesehen und mit dessen elektronischer Steuerung verbunden ist, da dieser Frequenzumrichter nur den individuell einzuspeisenden Strom für den Antrieb des jeweiligen Motors des stationären Förderers F beeinflussen muss. Auf diese Weise lässt sich mit sehr geringem Bauaufwand eine Drehzahlsteuerung der Drehstrommotoren gewährleisten.

Selbstverständlich liegt es im Rahmen der Erfindung, den Verteilerwagen V mit mehreren parallelen, separat betreibbaren Fördereinheiten auszustatten, beispielsweise mit zwei Fördereinheiten. Dann ist es möglich, in einem einzigen Anfahrvorgang, an z.B. zwei nebeneinander liegende Abstellplätze zwei Ladungsträger gleichzeitig abzugeben oder von diesen aufzunehmen oder einen Ladungsträger abzugeben und gleichzeitig einen anderen aufzunehmen.

Ein großer Vorteil der erfindungsgemäßen Lösung besteht darin, dass nicht nur auf die Verlegung einer stationären Verkabelung über größere Strecken verzichtet werden kann, sondern dass darüber hinaus für die Steuerung der Antriebe der stationären Förderer F keine zusätzlichen Schaltschränke aufgestellt und ebenfalls mit Verkabelung versehen werden müssen. Alle Antriebe der stationären Förderer F können problemlos über die jeweilige elektronische Steuerung des Verteilerwagens V beeinflusst werden. Dies gilt auch für den Fall, dass mehrere Verteilerwagen V eingesetzt werden oder der Verteilerwagen über mehrere parallele Fördereinheiten verfügt. Besonders wichtig ist es auch, dass die Erfindung die Bereitstellung gesonderter Steuerungen einschließlich der dafür erforderlichen Software für die stationären Förderer überflüssig macht. Dies bringt den weiteren Vorteil deutlich einfacherer Tests und erheblich kürzerer Inbetriebnahmezeiten mit sich.

## Patentansprüche

1. System, enthaltend mindestens eine verfahrbare Funktionseinrichtung und mehrere stationäre Funktionseinrichtungen mit jeweils einem elektrischen Verbraucher, der über eine Stromversorgung speisbar ist,
**dadurch gekennzeichnet,**
**dass** die Stromversorgung zumindest bei einem Teil der stationären Funktionseinrichtungen durch die mindestens eine mobile Funktionseinrichtung erfolgt.

2. System nach Anspruch 1,
**dadurch gekennzeichnet,**
**dass** die Funktionseinrichtungen jeweils als Transporteinrichtungen ausgebildet sind.

3. System nach Anspruch 2,
**dadurch gekennzeichnet,**
**dass** das System ein Pufferlager zur Zwischenspeicherung von Ladungsträgern (P) ist, mit einer Mehrzahl von die stationären Transporteinrichtungen bildenden Abstellplätzen für jeweils zumindest einen Ladungsträger (P), wobei zumindest ein Teil der Abstellplätze jeweils als durch einen eigenen elektrischen Antrieb (M) antreibbare Förderer (F₁ - Fₖ) ausgebildet und in mindestens einer Reihe (A₁, A₂) nebeneinander angeordnet sind, wobei ferner zumindest ein die mobile Transporteinrichtung bildender Verteilerwagen (V) vorgesehen ist, der entlang der mindestens einen Reihe (A₁, A₂) verfahrbar und mit einer Übergabevorrichtung versehen ist, mittels derer ein Ladungsträger(P) wahlweise an einen Abstellplatz übergebbar oder von diesem übernehmbar ist, und wobei die elektrische Energie zum Antrieb der Förderer (F₁ - Fₖ) der Abstellplätze jeweils von dem mindestens einen Verteilerwagen (V) individuell gesteuert einspeisbar ist, wenn der Verteilerwagen (V) eine Position relativ zum jeweiligen Förderer (F₁ - Fₖ) erreicht hat, in der die Übergabe oder Übernahme des Ladungsträgers (P) möglich ist.

4. Pufferlager nach Anspruch 3,
**dadurch gekennzeichnet,**
**dass** die antreibbaren Förderer (F₁ - Fₖ) als Ketten-, Gurt- oder Rollenförderer ausgebildet sind.

5. Pufferlager nach Anspruch 3 oder 4,
**dadurch gekennzeichnet,**
**dass** die Förderer (F₁ - Fₖ) Drehstrommotoren (M) als Antriebe aufweisen.

6. Pufferlager nach Anspruch 5,
**dadurch gekennzeichnet,**
**dass** die Drehstrommotoren (M) jeweils mit einem Frequenzumrichter zur Drehzahlsteuerung versehen sind und die Ansteuerung des jeweiligen Frequenzumrichters über eine direkte Signalübertragung von dem Verteilerwagen (V) erfolgt.

7. Pufferlager nach Anspruch 5,
**dadurch gekennzeichnet,**
**dass** die Drehstrommotoren (M) der Förderer (F₁ - Fₖ) der Abstellplätze jeweils ohne einen Frequenzumrichter ausgebildet sind und auf dem Verteilerwagen (V) ein Frequenzumrichter vorgesehen ist, der die Einspeisung des elektrischen Stroms für den jeweiligen Förderer (F₁ - Fₖ) frequenzsteuert.

8. Pufflager nach einem der Ansprüche 3 - 7,
**dadurch gekennzeichnet,**
**dass** im Bereich der Abstellplätze, der dem Verfahrweg des Verteilerwagens (V) zugewandt ist, Stromschienen (S) vorgesehen sind, die entsprechend den Abstellplätzen in elektrisch gegeneinander isolierte Abschnitte (S₁ - Sₖ) geteilt sind, die mit der Stromeinspeisung des jeweiligen Elektromotors (M) des Abstellplatzes verdrahtet sind, und dass an dem Verteilerwagen (V) Einspeiskontakte (C₁, C₂) vorgesehen sind, die mit den Stromschienenabschnitten (S₁ - Sₖ) zusammenwirken.

9. Pufferlager nach einem der Ansprüche 3 - 7,
**dadurch gekennzeichnet,**
**dass** im Bereich der Abstellplätze, der dem Verfahrweg des Verteilerwagens (V) zugewandt ist, Einrichtungen zur berührungslosen, insbesondere induktiven Energieübertragung zwischen dem Verteilerwagen (V) und den Förderern (F₁ - Fₖ) der Abstellplätze vorgesehen sind.

10. Pufferlager nach einem der Ansprüche 3 - 9,
**dadurch gekennzeichnet,**
**dass** die Übergabevorrichtung des Verteilerwagens (V) als Mobilförderer (MF), insbesondere als mobiler Ketten-, Gurt- oder Rollenförderer ausgebildet ist.

11. Pufferlager nach Anspruch 10,
**dadurch gekennzeichnet,**
**dass** der Mobilförderer (MF) mindestens zwei parallele, separat betreibbare Fördereinheiten zur parallelen Übergabe oder Übernahme mehrerer Ladungsträger (P) aufweist.

12. Pufferlager nach einem der Ansprüche 3 - 11,
**dadurch gekennzeichnet,**
**dass** der Verteilerwagen (V) über eine eigene elektronische Steuerung verfügt.

13. Pufferlager nach Anspruch 12,
**dadurch gekennzeichnet,**
**dass** die elektronische Steuerung des Verteilerwagens (V) stationär angeordnet ist.

14. Pufferlager nach Anspruch 12 oder 13,
**dadurch gekennzeichnet,**
**dass** der Verteilerwagen (V) eine mit der elektronischen Steuerung datentechnisch verbundene Detektoreinrichtung zur Feststellung, ob sich ein Ladungsträger (P) auf dem Verteilerwagen (V) befindet, insbesondere eine Lichtschrankeneinrichtung, aufweist.

15. Pufferlager nach einem der Ansprüche 10 - 14,
**dadurch gekennzeichnet,**
**dass** die Abstellplätze jeweils mit einer Detektoreinrichtung (D), insbesondere einer Lichtschrankeneinrichtung, zur Feststellung, ob ein Ladungsträger (P) den zwischen dem Förderer (F₁ - Fₖ) des Abstellplatzes und dem Mobilförderer (MF) des Verteilerwagens (V) bestehenden Spalt passiert hat, versehen sind und diese Detektoreinrichtungen (D) jeweils in der Übergabe- oder Übernahmeposition des Verteilerwagens (V) selektiv mit der elektronischen Steuerung des Verteilerwagens (V) datenmäßig koppelbar sind, insbesondere über elektrische Schleifkontakte oder eine induktive Ankopplung.

16. Pufferlager nach einem der Ansprüche 10 - 15,
**dadurch gekennzeichnet,**
**dass** die elektronische Steuerung des Verteilerwagens (V) eine Nachlaufsteuerung beinhaltet, die die Antriebe (M) der Förderer (F₁ - Fₖ, MF) des Verteilerwagens (V) und des jeweiligen Abstellplatzes nach Detektierung eines Passierens des Spalts zwischen zwei in Übergabe- oder Übernahmeposition befindlichen Förderern (F₁ - Fₖ, MF) durch den Ladungsträger (P) solange weiter betreibt, bis der jeweilige Ladungsträger (P) seine Sollposition auf dem Abstellplatz (Übergabevorgang) oder dem Verteilerwagen (V) (Übernahmevorgang) erreicht hat.

17. Pufferlager nach einem der Ansprüche 3 - 16,
**dadurch gekennzeichnet,**
**dass** zwei sich in parallelem Abstand gegenüberliegende Reihen (A₁, A₂) von Abstellplätzen vorgesehen sind und der Verteilerwagen (V) in der zwischen den beiden Reihen (A₁, A₂) gebildeten Gasse verfahrbar ist.

18. Pufferlager nach einem der Ansprüche 3 - 17,
**dadurch gekennzeichnet,**
**dass** der Verfahrweg des Verteilerwagens (V) durch Schienen (R₁, R₂) gebildet ist und der Verteilerwagen (V) seinerseits mittels Schleifkontakten oder induktiv oder mittels Schleppkabel von außen mit elektrischem Strom versorgbar ist.
